# EUROPÄISCHE PATENTSCHRIFT

(11) **EP 3 446 439 B1**
(45) Veröffentlichungstag und Bekanntmachung des Hinweises auf die Patenterteilung: **01.04.2026**
(21) Anmeldenummer: 17719232.5
(22) Anmeldetag: 21.04.2017
(51) Int. Cl.: H04L 41/0213, H04L 41/046, H04L 41/0246, G06F 11/30

(54) **MIB-ORIENTIERTES PROTOKOLL FÜR HOCHWIRKSAME HTTP-VERWALTUNGSPROZEDUREN**
MIB-ORIENTED PROTOCOL FOR HIGHLY EFFECTIVE HTTP MANAGEMENT PROCEDURES
PROTOCOLE ORIENTÉ MIB POUR PROCÉDURES DE GESTION HTTP À HAUTE EFFICACITÉ

(30) Priorität: 22.04.2016 DE 102016206898
(43) Veröffentlichungstag der Anmeldung: 27.02.2019
(73) Patentinhaber: Hirschmann Automation and Control GmbH, 72654 Neckartenzlingen (DE)
(72) Erfinder: WALDEN, Andreas, 72124 Pliezhausen (DE); RIES, Michael, 72072 Tübingen (DE)
(74) Vertreter: Greif, Thomas
(86) Internationale Anmeldenummer: PCT/EP2017/059488
(87) Internationale Veröffentlichungsnummer: WO 2017/182615

(56) Entgegenhaltungen:
- EP-A1- 1 154 601
- WO-A1-98/04067
- US-A1- 2011 295 989
- US-B1- 7 739 362

## Beschreibung

Die Erfindung betrifft ein Verfahren zum Übertragen von Datenpaketen zwischen einer ein netzwerküberwachenden Netzmanagementstation und Netzwerkgeräten des Netzwerkes gemäß Patentanspruch 1.

Zur Überwachung von Netzwerkgeräten, der Fernsteuerung und Fernkonfiguration von Netzwerkgeräten sowie für die Fehlererkennung und Fehlerbenachrichtigung von Netzwerkgeräten eines Netzwerkes wird eine übergeordnete Netzmanagementstation eingesetzt, die mittels eines Netzwerkprotokolles die Netzwerkgeräte von einer zentralen Stelle aus die Netzwerkgeräte steuert und überwacht. In der Praxis hat sich das Simple network management Protocol (SNMP) etabliert, wobei dieses Protokoll den Aufbau der Datenpakete, die gesendet werden können, und den Kommunikationsablauf zwischen der Netzmanagementstation und den angeschlossenen Netzwerkgeräten beschreibt. Für die Überwachung werden Agenten in den Netzwerkgeräten eingesetzt, bei denen es sich um Programme handelt, die direkt auf den überwachten Netzwerkgeräten laufen oder bei denen es sich um Hardware handelt, die die gleiche Aufgabe erfüllt.

Für die Kommunikation zwischen der Netzmanagementstation und den Netzwerkgeräten definiert das Simple Network Management Protocol sechs verschiedene Datenpakete die gesendet werden können (get-request, get-nextrequest, get-bulk, set-request, get-response and trap).

Für den Datenaustausch zwischen Netzmanagementstation und Netzwerkgeräten ist nicht nur das vorgeschriebene Protokoll erforderlich, sondern auch eine Datenbasis in dem jeweiligen Netzwerkgerät, die im Zusammenhang mit dem SNMP als Management Information Base (MIB) bezeichnet wird. Diese MIB ist eine Beschreibung, die Definitionen von Management-Informationen enthält, die dazu benutzt werden können, ein an ein Netzwerk angeschlossenes Netzwerkgerät aus der Ferne zu steuern, zu überwachen und zu konfigurieren. Für diese Funktionen wird, wie ebenfalls vorstehend schon beschrieben, in der Praxis SNMP verwendet, da sich dieses Protokoll weltweit als Standard etabliert hat. Die Management-Informationen werden managed objects (verwaltete Objekte) genannt, wobei im strengen Sinne ein managed object kein wirklicher Datenwert ist, sondern es die Beschreibung eines Datenwertes darstellt. Das bedeutet, dass die Management Information Base eines Netzwerkgerätes keine Daten enthält, sondern diese Basis nur beschreibt, wo diese Daten in dem Netzwerkgerät zu finden sind und wie sie aussehen.

In der Praxis hat sich jedoch herausgestellt, dass die Übertragung von Datenpaketen auf Anforderung einer Netzmanagementstation an dem Netzwerkgerät und wieder zurück auf die größte für ein Einzelframe des Datenpaketes im Netzwerk zulässige Framegröße (die sogenannte maximale Übertragungseinheit, MTU) begrenzt ist. Aus diesem Grunde führen Abfragen großen Volumens durch die Netzmanagementstation, insbesondere die Abfragen großer Datenstücke, zu einer mehrfachen Aneinanderreihung von Abfragen durch die Netzmanagementstation und Antworten durch das angefragte Netzwerkgerät in Netzwerken zu einer langen Wartezeit, hohen Paketverlusten oder vergleichbaren Nachteilen, die allesamt ein kritischer Aspekt sind.

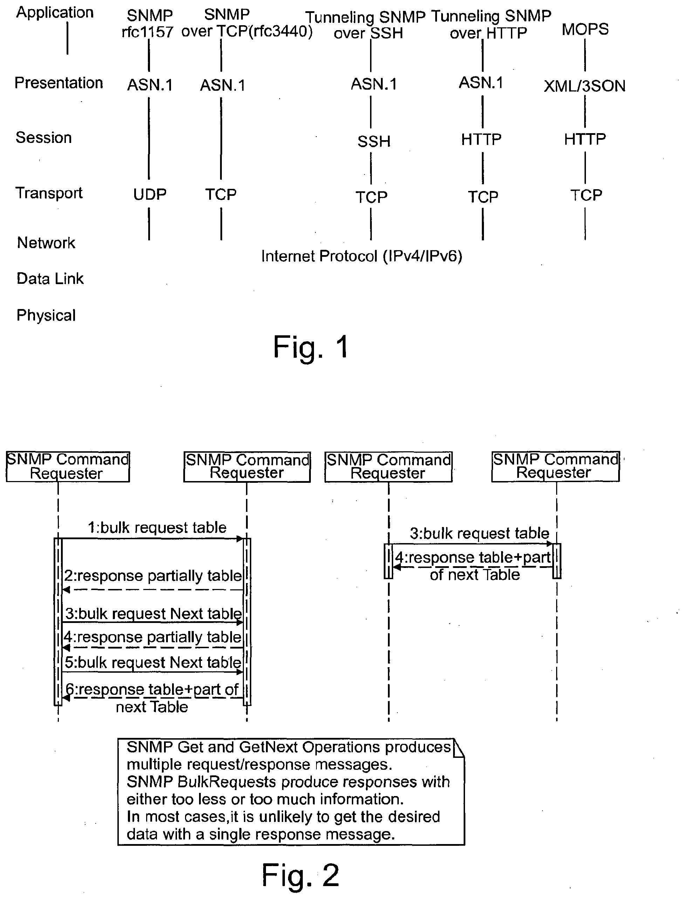

Stellvertretend für ein Beispiel aus dem Stand der Technik ist auf Figur 2 zu verweisen, in der eine bekannte SNMP-Tabellenabfrage gezeigt ist. Die Netzmanagementstation (SNMP-Befehlsanforderer) will eine große Anzahl von Daten (Großabfragetabelle) in einem Netzwerkgerät (SNMP-Abgeber) anfragen, die nach der Abfrage zurückübertragen werden sollen. Dies kann in nachteiliger Weise nicht in einem einzigen Abfrageschritt erfolgen, sondern es sind gemäß dem Beispiel in Figur 2 insgesamt sechs Schritte (linke Darstellung der Figur 2) erforderlich.

Je nach gewünschter Großabfragetabelle bzw. deren Inhalt kann es vorkommen, dass die gewünschten Daten in einer einzigen Antwortnachricht abgefragt und abgegeben werden können (rechte Darstellung der Figur 2), wobei dies jedoch heutzutage selten oder gar nicht mehr vorkommt, da die Daten, die für die Steuerung, Konfiguration und Überwachung der Netzwerkgeräte durch die Netzmanagementstation einen so großen Umfang angenommen haben, dass diese nicht mehr in einer einzigen Antwortnachricht übertragen werden können. Weiterhin wird hier auf die US-Patentschrift US7739362 B1 verwiesen, die eine darstellende Dokumentenform (HTML-Template) und Schnittstelle (HTTP, SNMP) mit der Intention beschreibt, MIB-Objekte in einem Web-Browser beziehungsweise einer Applikation zu browsen beziehungsweise darzustellen. Die Europäische Patentanmeldung EP1154601 A1 beschreibt eine MIB-Schnittstelle, die an SNMP-Kommandos angelehnt ist. Diese Schnittstelle verarbeitet die Abfrage ähnlich zu SNMP und durchläuft den MIB-Baum in preorder Logik.

Der Erfindung liegt daher die Aufgabe zugrunde, ein Verfahren zum Übertragen von Datenpaketen zwischen einer ein netzwerküberwachenden Netzmanagementstation und Netzwerkgeräten des Netzwerkgerätes zu verbessern, ohne das Einschränkungen bei der Abfrage, dem Zusammenstellen der abgefragten Daten und der Rückübertragung der zusammengestellten Daten gegeben sind.

Diese Aufgabe ist durch die Merkmale des Patentanspruches 1 gelöst.

Erfindungsgemäß ist vorgesehen, dass die Netzmanagementstation mittels eines konfigurierbaren Befehles auf eine Management Information Base eines Netzwerkgerätes zugreift und Datenpakete abruft, die der Konfiguration des Befehles entsprechen. Während im Stand der Technik, insbesondere bei der Anwendung des SNMP, nicht nur die Anzahl, sondern auch der Inhalt der Befehle fest vorgegeben ist, ist es nun mittels des konfigurierbaren Befehles nach der Erfindung möglich, genau diejenigen Daten auf dem Netzwerkgerät abzurufen und in einem beliebigen Umfang zusammenzustellen und übertragen zulassen. Damit wird in vorteilhafter Weise die Restriktion, die durch das SNMP gegeben ist, hinsichtlich der Anzahl und der Inhalt seiner Befehle, aufgehoben. Das erfindungsgemäße Protokoll, welches auch als MIBorientiertes Protokoll (MOP) bezeichnet werden kann, unterliegt somit keinen derartigen Einschränkungen, insbesondere Datengrößeneinschränkungen, des SNMP. Daher wird in vorteilhafter Weise auf Basis eines beliebig konfigurierbaren Befehles die komplette Abfrage übertragen, bevor der Server sie verarbeitet. Mit vollständigen Abfragen kann der Server die Datenverarbeitung, beispielsweise das Festlegen der Sperren einer Datenbank, Pipeline-Vorgänge und dergleichen optimieren.

Bei den erfindungsgemäßen Abfragen von Tabellendaten aus der MIB des Netzwerkgerätes ermöglicht das erfindungsgemäße MOP die Einrichtung eines Filters zu einer noch stärkeren Reduzierung der Netzwerkbandbreite und Optimierung der Datenverarbeitung, da genau diejenigen Daten aus dem Netzwerkgerät angefragt, zusammengestellt und übertragen werden können, die dem konfigurierten Befehl entsprechen, der insbesondere Rücksicht auf die vorhandene Netzwerkbandbreite nehmen kann. Dies ist bei einer gleichwertigen SNMP-Großabfrage nicht möglich, da hier wir eingangs schon beschrieben, eine Vielzahl von Einzelabfragen und die Übertragung von Teilinhalten der Datenbank erfolgen müssen. Denn mit einer SNMP-Großabfrage kann die gewünscht Tabelle nicht in einem einzigen Abfrage-/Antwort-Meldungsaustausch abgerufen werden, da dieses Protokoll keine Endobjektkennung für die Abfrage definiert und nur eine Anfangskennung sowie die Anzahl der Wiederholungen unterstützt (siehe auch Figur 2).

Demgegenüber bildet das erfindungsgemäße MOP die MIB-Baustruktur zu einer Zuordnung mit Schlüsseln und Werten, wobei die Schlüssel die verfügbaren Knoten (Nodes) und die Werte der verfügbaren Verzweigungen dieser Knoten darstellen. Diese Knoten können in einer einzigen Abfrage über das erfindungsgemäße MOP abgerufen werden.

Nach dem Stand der Technik ist die Management Information Base (MIB) ein Datenmodell, welches sehr oft mit dem weitverbreiteten Simple Network Management Protocol (SNMP), einem weltweiten Standardprotokoll zur Verwaltung von Geräten auf IP-Netzwerken, verknüpft ist.

Die erfindungsgemäße Lösung setzt auf ein Verfahren zum Übertragen besagter MIB-Daten auf, die nicht den Einschränkungen aktueller Implementierungen (dass heißt der SNMP-Versionen 1-3) unterliegt.

Mit dem erfindungsgemäßen MOP werden die Vorteile erzielt, dass ein geringerer Einfluss von Netzwerkwartezeiten erfolgt, als wie dies unter Anwendung des SNMP möglich wäre. Es wird ein minimaler Netzwerkverkehr im Vergleich zu SNMP erzielt. Weiterhin ist der Vorteil gegeben, dass gängige HTTP-Anwendungsfälle unterstützt werden und ein müheloser Übergang von MIB-basierten SNMP-Implementierungen zu dem Verfahren zum Übertragen von Daten nach dem MOP gegeben ist. Außerdem wird in weiterer vorteilhafter Weise eine gegenüber SNMP erweiterte Fehlerbehandlung unterstützt.

In Weiterbildung der Erfindung ist vorgesehen, dass der Zugriff der Netzmanagementstation auf das jeweilige Netzwerkgerät http-basiert erfolgt. Während das etablierte und standardmäßige SNMP mit UDP (User datagram protocol) als Übertragungsprotokoll und einem Binärdatenformat arbeitet, ermöglicht das erfindungsgemäße MOP leichte, http-basierte Client-Frameworks für den Zugriff auf die MIB-Informationen.

Das erfindungsgemäße MOP ermöglicht somit in vorteilhafter Weise einen einfachen Übergang von MIB-basierten SNMP-Implementierungen. Da die MIB-Zugriffsebene häufig von der SNMP-Ebene abgekoppelt ist, können die Implementierer direkt auf die MIB Daten zugreifen, um eine Antwort nach dem MOP zu formen. Der MOP-Server kann vorzugsweise als http-Dienst laufen und vorhandene Sicherheits- und Lastenausgleichsfunktionen des HTTP-Servers nutzen.

In Weiterbildung der Erfindung ist vorgesehen, dass die angeforderten Daten in einem Textdatenformat von der Management Information Base abgegeben werden. In vorteilhafter Weise können dadurch moderne Webbrowser und Web-APIs einen MOP-Client implementieren. Während die grundlegende Protokolloperation auf der RPC-Definition (remote procedure call) NETCONF aufsetzt, definiert das erfindungsgemäß MOP sein eigenes Datenmodel und seine Datendarstellungsebene zur Darstellung der MIB Daten. Beispiele für ein Textdatenformat sind XML oder JSON, wobei diese Aufzählung nicht abschließend ist. Da das erfindungsgemäße MOP einen einfachen Übergang von MIB-basierten SNMP-Implementierungen ermöglicht, wurde das Datenformat (Textdatenformat) so gewählt, dass eine direkte Zuordnung, insbesondere eine 1:1 Zuordnung, der hierarchischen MIB-Struktur zu den MOP Daten möglich ist.

Als weiterer Vorteil ist zu erwähnen, dass das erfindungsgemäße MOP eine freie Zuweisung von Fehlercodes entweder zu Protokolloperationen oder zu MIB-Datenobjekten ermöglicht, so dass die Einschränkung, dass SNMP-Antwortmeldungen nur eine begrenzte Auswahl von Fehlerstatuscodes zulässt, in vorteilhafter Weise aufgehoben worden ist. Eine direkte Zuordnung, insbesondere einer 1:1 Zuordnung von SNMP- zu MOP-Fehlercodes ist gegeben und kann ohne weiteres von den Implementierern angewandt werden. Zur Unterstützung der erweiterten Fehlerbehandlung kann dasjenige Element, dass die Daten eines MIB-Objektes enthält, erweitert werden.

Zur Erläuterung wird im Folgenden kurz auf die Figuren verwiesen.
Figur 1 zeigt beispielhaft eine Netzwerktransportschicht.
Figur 2 zeigt, wie eingangs schon beschrieben, beispielhaft eine Tabellenabfrage eines Netzwerkgerätes durch eine Netzmanagementstation basierend auf SNMP. Das Verfahren nach der Erfindung ermöglicht es, exakt die angeforderten Daten abzufragen (und somit nicht mehr oder weniger Daten abfragen zu müssen). Es werden daher in vorteilhafter Weise keine Abfragen über die MIB-Knoten hinausgemacht (siehe Figur 2, SNMP "part of next table" und Filtermöglichkeit).

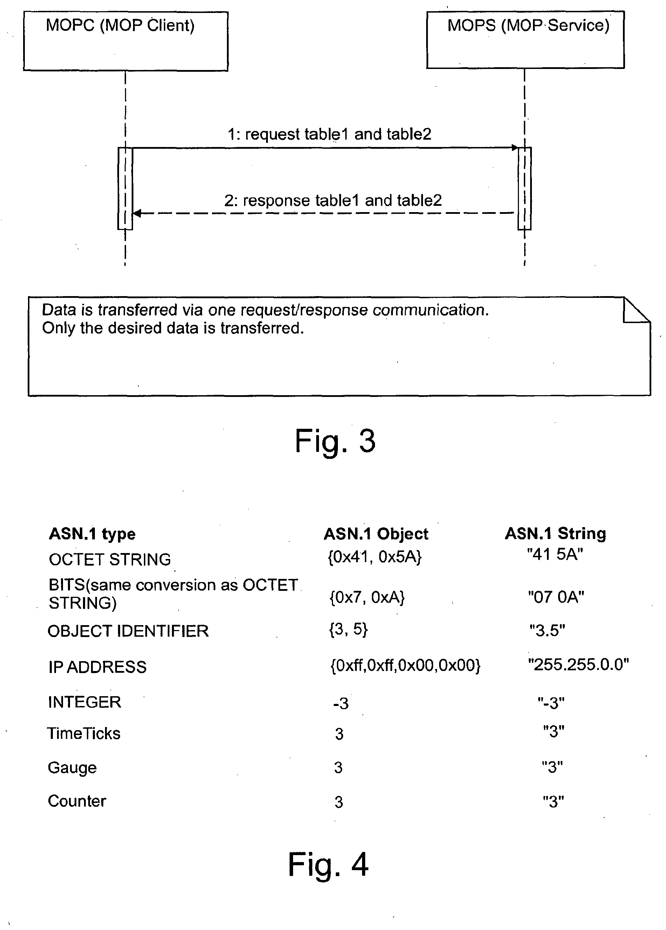

In Figur 3 ist eine erfindungsgemäße MOP-Tabellenabfrage gezeigt, wobei direkt erkennbar ist, dass mittels einer Anfrage auf Basis eines konfigurierbaren Befehles die Abfrage erfolgen kann, wodurch die Zusammenstellung der gewünschten Daten (hier beispielsweise Tabelle eins und Tabelle zwei) und die zusammengestellten Daten in einem Schritt von dem Netzwerkgerät an die Netzmanagementstation zurückübertragen werden.
Figur 4 zeigt eine Gegenüberstellung der Daten nach MIB und dem erfindungsgemäßen MOP.

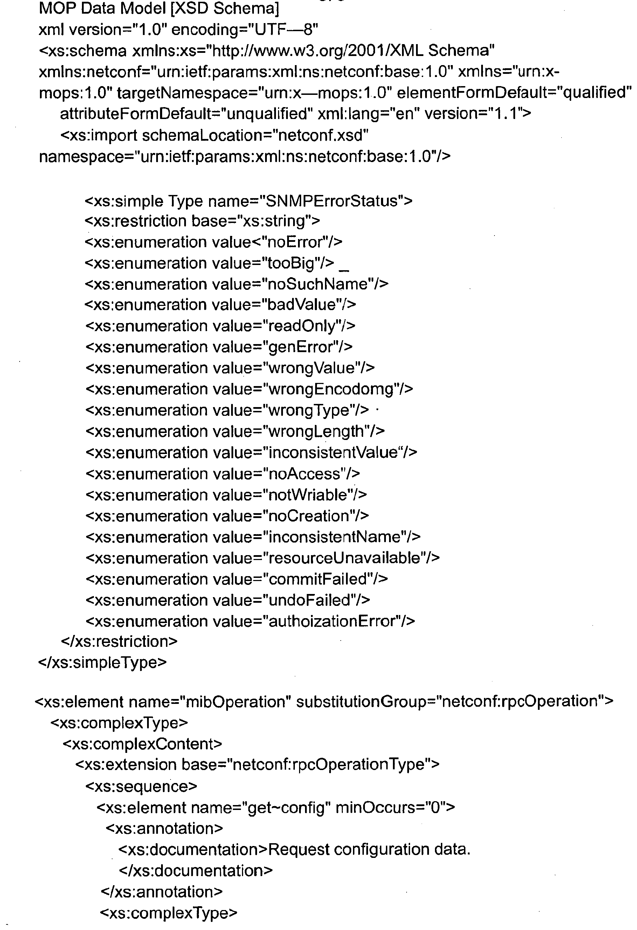

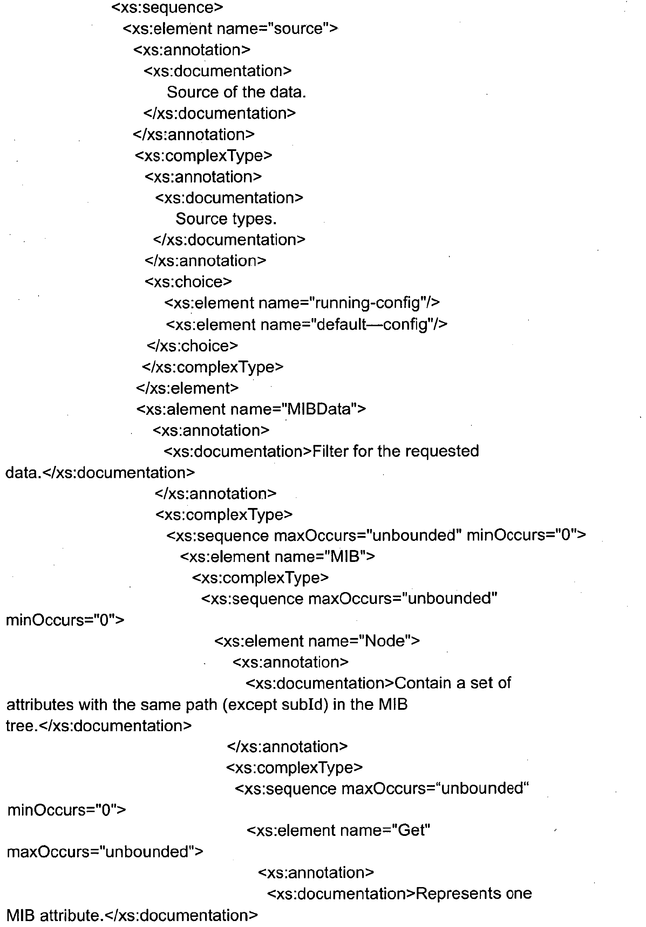

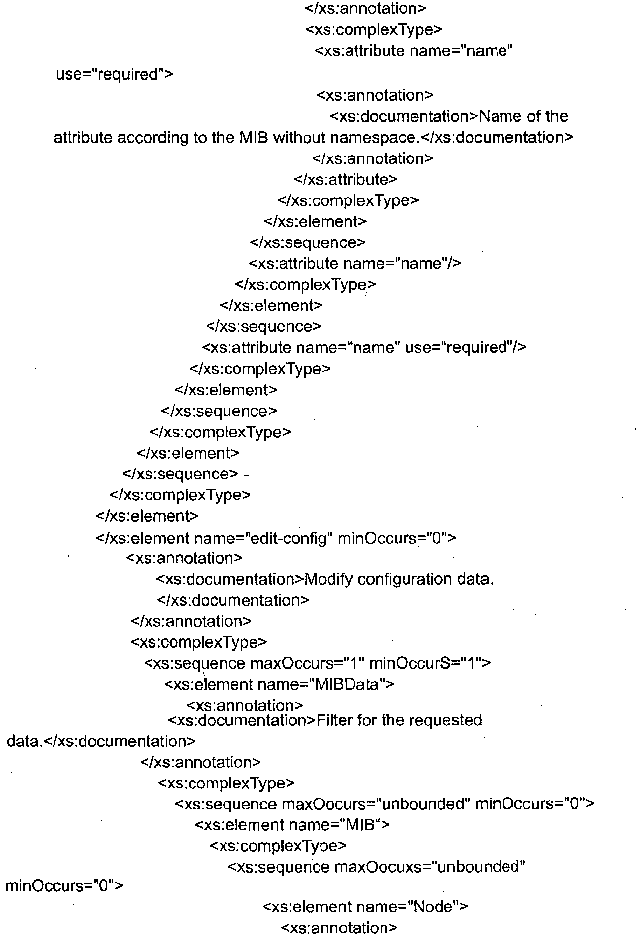

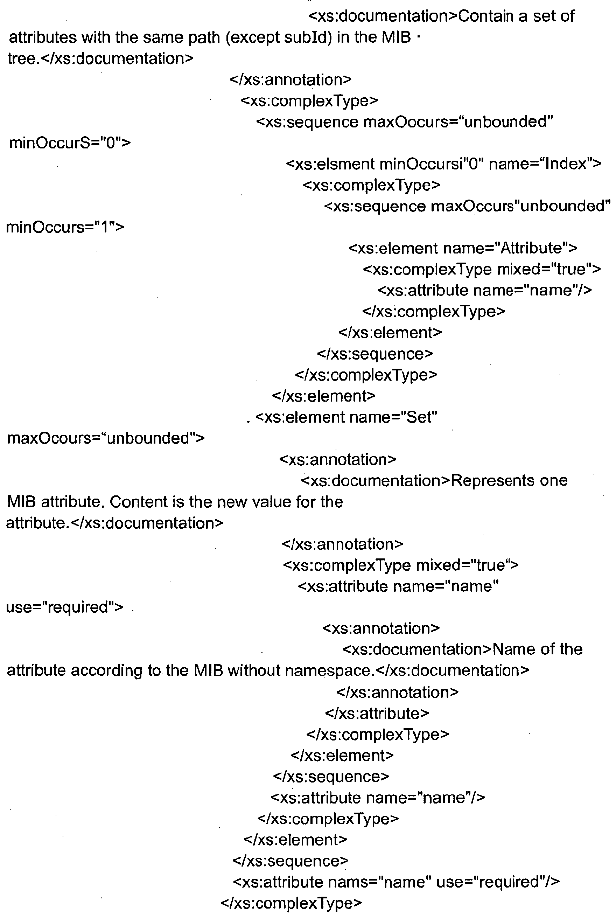

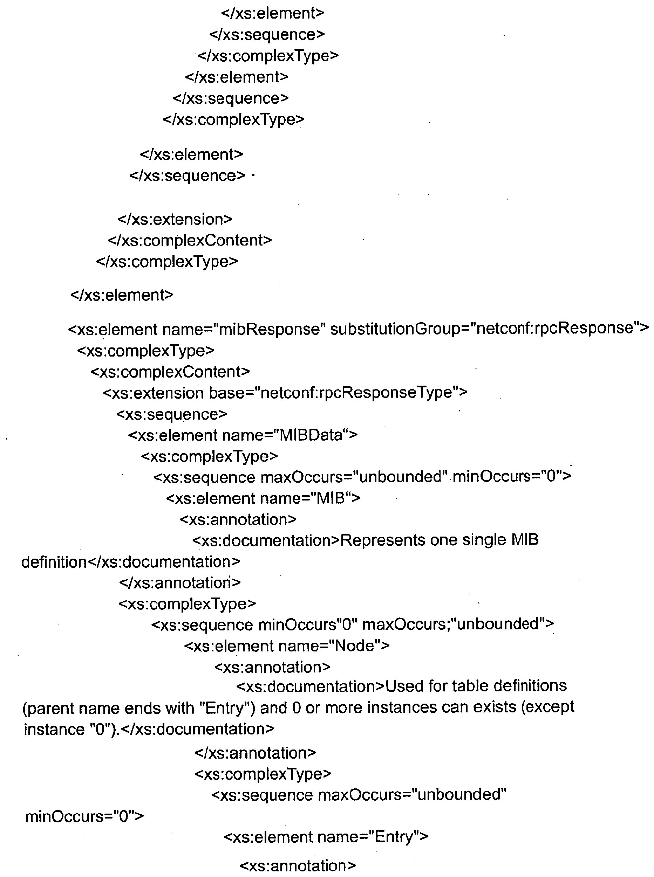

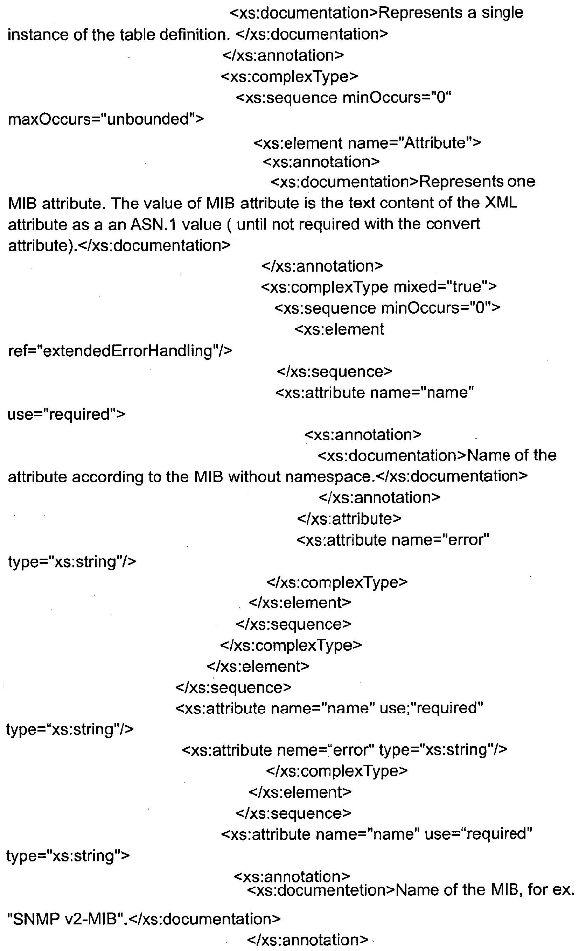

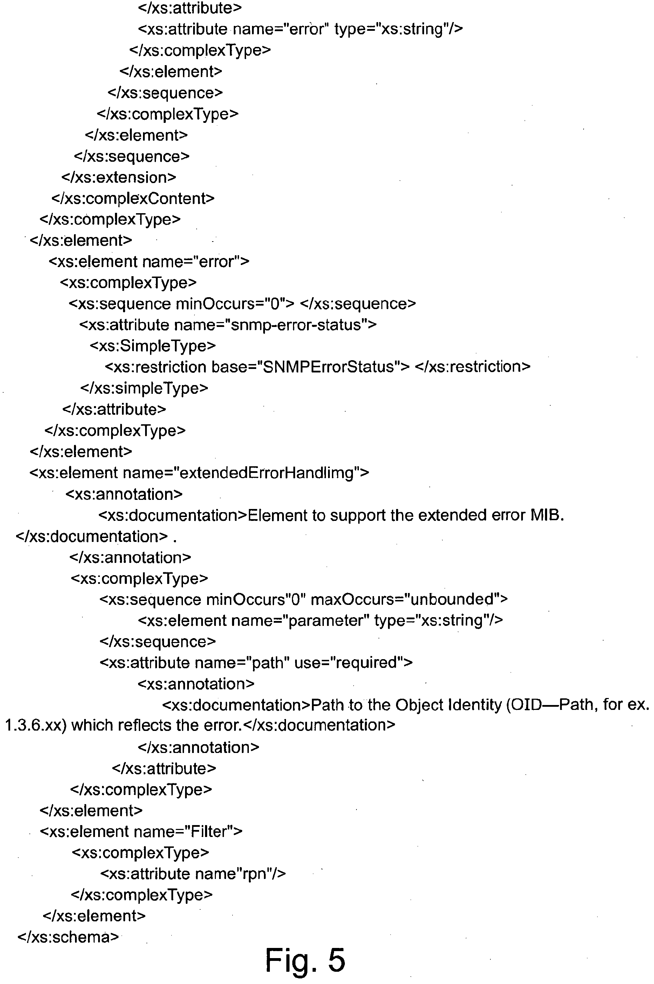

Figur 5 schließlich zeigt ein MOP-Datenmodell (XSD Schema) nach der Erfindung.

## Patentansprüche

1. Verfahren zum Übertragen von Daten zwischen einer ein Netzwerk überwachenden Netzmanagementstation und Netzwerkgeräten des Netzwerkes, mit folgenden Verfahrensschritten: Installieren von Agenten auf den Netzwerkgeräten, wobei die Netzmanagementstation über Befehle mit dem jeweiligen Agenten eines Netzwerkgerätes kommuniziert; Zugreifen der Netzmanagementstation mittels eines konfigurierbaren Befehles in Form einer MOP-Abfrage auf eine Management Information Base, MIB, eines Netzwerkgerätes**,** wobei die MOP-Abfrage eine Abfrage nach einem MIB-orientierten Protokoll, MOP, ist; und Abrufen von Daten die der Konfiguration des Befehles entsprechen, wobei mittels des einen konfigurierbaren Befehls die Übertragung von Daten in einer einzigen MOP-Antwortnachricht erfolgt, wobei die MOP-Abfrage als MOP-Tabellenabfrage erfolgt, wobei mittels einer Anfrage auf Basis des konfigurierbaren Befehles die Abfrage erfolgt, wodurch die Zusammenstellung der gewünschten Daten und die zusammengestellten Daten in einem Schritt von dem Netzwerkgerät an die Netzmanagementstation zurück übertragen werden und in der Antwortnachricht exakt die abgefragten Daten geliefert werden.

2. Verfahren nach Anspruch 1, **dadurch gekennzeichnet, dass** der Zugriff http-basiert erfolgt.

3. Verfahren nach Anspruch 1 oder 2, **dadurch gekennzeichnet, dass** die angeforderten Daten in einem Textdatenformat von der Management Information Base abgegeben werden.

4. Verfahren nach Anspruch 3, **dadurch gekennzeichnet, dass** die MOP-Abfrage die Einrichtung eines Filters umfasst, da genau diejenigen Daten aus dem Netzwerkgerät angefragt, zusammengestellt und übertragen werden, die dem konfigurierten Befehl entsprechen.

5. Verfahren nach einem der Ansprüche 1 bis 4, **dadurch gekennzeichnet, dass** mehrere Tabellen in jeweils einer MOP-Abfrage und Antwortnachricht abgefragt und empfangen werden können.

## Claims

1. Method for transmitting data between a network management station monitoring a network and network devices of the network, comprising the following method steps: installing agents on the network devices, wherein the network management station communicates with the respective agent of a network device using commands; the network management station accessing a management information base, MIB, of a network device by means of a configurable command in the form of an MOP query, wherein the MOP query is a query according to an MIB-oriented protocol, MOP; and retrieving data corresponding to the configuration of the command, wherein data are transmitted in a single MOP response message by means of the one configurable command, wherein the MOP query is effected as an MOP table query, wherein the query is effected by means of a request based on the configurable command, as a result of which the compilation of the desired data and the compiled data are transmitted back from the network device to the network management station in one step and precisely the queried data are supplied in the response message.

2. Method according to Claim 1, **characterized in that** access is carried out in a HTTP-based manner.

3. Method according to Claim 1 or 2, **characterized in that** the requested data are supplied by the management information base in a text data format.

4. Method according to Claim 3, **characterized in that** the MOP query comprises the setup of a filter, since exactly those data which correspond to the configured command are requested, compiled and transmitted from the network device.

5. Method according to one of Claims 1 to 4, **characterized in that** a plurality of tables can be queried and received in each case in an MOP query and response message.

## Revendications

1. Procédé de transmission de données entre une station de gestion de réseau surveillant un réseau et des appareils de réseau du réseau, avec les étapes de procédé suivantes : installation d'agents sur les appareils de réseau, la station de gestion de réseau communiquant avec l'agent respectif d'un appareil de réseau par des instructions ; accès à une MIB (base d'informations pour la gestion) d'un appareil de réseau par la station de gestion de réseau au moyen d'une instruction configurable sous la forme d'une requête MOP, la requête MOP étant une requête selon un protocole MOP orienté MIB ; et extraction de données qui correspondent à la configuration de l'instruction, les données étant transmises dans un seul message de réponse MOP au moyen de l'instruction configurable, la requête MOP étant exécutée comme une requête de table MOP, la requête étant exécutée au moyen d'une requête sur la base de l'instruction configurable, ce qui permet de renvoyer la compilation des données souhaitées et les données compilées en une seule étape de l'appareil de réseau à la station de gestion de réseau et de fournir exactement les données extraites dans le message de réponse.

2. Procédé selon la revendication 1, **caractérisé en ce que** l'accès est effectué d'une manière basée sur http.

3. Procédé selon la revendication 1 ou 2, **caractérisé en ce que** les données demandées sont délivrées par la base d'informations pour la gestion en un format de données textuelles.

4. Procédé selon la revendication 3, **caractérisé en ce que** la requête MOP comprend la mise en place d'un filtre, étant donné que précisément les données qui correspondent à l'instruction configurée sont demandées, compilées et transmises depuis l'appareil de réseau.

5. Procédé selon l'une des revendications 1 à 4, **caractérisé en ce que** plusieurs tables peuvent être interrogées et reçues dans respectivement une requête MOP et un message de réponse.
